# EUROPEAN PATENT APPLICATION

(11) **EP 4 531 338 A1**
(43) Date of publication of application: **02.04.2025**
(21) Application number: 24201150.0
(22) Date of filing: 18.09.2024
(51) Int. Cl.: H04L 9/40, H04W 4/02, H04W 12/08, H04W 12/63

(54) **SYSTEM AND METHODS FOR UNLOCKING ULTRA-WIDEBAND DEVICES**

(30) Priority: 27.09.2023 US 202363585737 P; 18.03.2024 US 202463566714 P
(71) Applicant: Qorvo US, Inc., Greensboro, NC 27409 (US)
(72) Inventor: PERRONE, Gabriele, 06600 Antibes (FR); LE THIERRY D'ENNEQUIN, Christophe, 75005 Paris (FR)
(74) Representative: D Young & Co LLP

(57) **Abstract**

A method for enabling unlocking an ultra-wide band (UWB) device in a communication system. The method includes, receiving a set of location parameters from a user; determining an unlockable range based on the set of location parameters and a map; receiving, in a lock mode, one or more location-indicative signals from an infrastructure of the communication system; computing a self-position on the map based on the one or more location-indicative signals; and determining whether the self-position is within the unlockable range.

## Description

### FIELD OF THE DISCLOSURE

The present disclosure relates to ultra-wideband (UWB) enabled devices and systems for unlocking UWB devices, in particular, to provide means to detect a user's intention for unlocking a UWB device without sacrificing security.

### BACKGROUND

As localization technologies advance, a user can use a user device (e.g., a mobile phone or wearable device that is carried by the user) to control a personal device (e.g., a suitable electronic device such as a computer, a car, etc.), e.g., from a distance. For example, the user device can be configured to control the lock and unlock modes of the personal device based on the distance between the user device and the personal device. However, such automatic unlocking using a user device faces various challenges such as successfully detecting user's intention, high energy consumption, and low security. For example, the personal device may wrongfully unlock when the user did not intend to unlock, the energy consumption for monitoring whether the user device is nearby can be high, and/or the personal device can be unlocked if itself and/or the user device is stolen. Thus, a method and system to overcome such challenges is needed.

### SUMMARY

Particular aspects are set out in the appended independent claims. Various optional embodiments are set out in the dependent claims. Embodiments of the disclosure provide a method for enabling unlocking an ultra-wide band (UWB) device in a communication system. The method includes receiving a set of location parameters from a user; determining an unlockable range based on the set of location parameters and a map; receiving, in a lock mode, one or more location-indicative signals from an infrastructure of the communication system; computing a self-position on the map based on the one or more location-indicative signals; and determining whether the self-position is within the unlockable range.

In some embodiments, the method further includes, in response to the self-position being in the unlockable range, obtaining, in the lock mode, a distance from a second UWB device.

In some embodiments, the obtaining of the distance from the second UWB device includes transmitting an uplink time-difference of arrival (UL-TDoA) signal to an infrastructure; and receiving the distance from the infrastructure.

In some embodiments, the obtaining of the distance from the second UWB device includes computing the distance using Bluetooth ranging.

In some embodiments, the method further includes, in response to the distance being less than a predetermined activation distance that is less than the unlockable range, entering an activation mode by displaying non-confidential features on a locked screen.

In some embodiments, the method further includes turning on at least one of Bluetooth, UWB, or an angle-of-arrival (AoA). The AoA may have the capability to measure the direction of arrival of a UWB signal and thus a relative angular position to the second UWB device. ).

In some embodiments, the method further includes monitoring the distance and relative angular position to the second UWB device using UWB ranging and AoA measurements, with the option of using Bluetooth Low energy as OOB technique; and in response to the distance being less than a predetermined unlock distance, entering an unlock mode by unlocking non-confidential features and confidential features.

In some embodiments, the method further includes receiving, from the user, a set of second location parameters corresponding to an unlock perimeter; determining, in the activation mode, whether the second UWB device is within the unlock perimeter using at least one of the Bluetooth, UWB, or AoA; in response to the second UWB device being within the unlock perimeter, entering an unlock mode by unlocking the locked screen; and in response to the second UWB device being beyond the unlock perimeter, maintaining the activation mode.

In some embodiments, the set of second location parameters include an unlock distance range and an unlock angle.

In some embodiments, the method further includes receiving, from the user, a set of configuration parameters corresponding to a trigger movement and a time period; determining, in the activation mode, whether the trigger movement is received in the time period; in response to receiving the trigger movement in the time period, entering an unlock mode by unlocking the locked screen; and in response to not receiving the trigger movement in the time period, maintaining the activation mode.

In some embodiments, the trigger movement includes physical contact from the user.

In some embodiments, the one or more location-indicative signals include a plurality of downlink-time difference of arrival (DL-TDoA) signals; and the computing of the self-position includes performing trilateration on the plurality of DL-TDoA signals with respect to the map.

In some embodiments, the one or more location-indicative signals include a plurality of WiFi signals; and the computing of the self-position includes comparing strengths of the plurality of WiFi signals with a pre-recorded signal strength table to determine the self-position with respect to the map.

In some embodiments, the one or more location-indicative signals include a WiFi signal or a cellular signal that includes an IP address; and the computing of the self-location includes determining the self-location based on the IP address.

In some embodiments, in response to the self-position being beyond the unlockable range, maintaining the lock mode.

Embodiments of the present disclosure also include a method for enabling unlocking an ultra-wide band (UWB) device in a communication system. The method includes receiving a first signal indicating a first location of a first ultra-wideband (UWB) device and a second signal indicating a second location of a second UWB device; determining a distance between the first UWB device and the second UWB device based on the first signal and the second signal; and in response to the distance being less than a predetermined activation range, transmitting respective signals to the first UWB device and the second UWB device to turn on at least one of Bluetooth or UWB.

In some embodiments, the first signal includes time of flight (TOF) information of the first UWB device, and the second signal includes TOF information of the second UWB device.

Some embodiments of the present disclosure provide an ultra-wideband (UWB) device, comprising a transceiver operable to perform a UWB communication; a memory for storing program instructions, a map of an area covered by a wireless network, a table of strengths of WiFi signals in the area, distances, angle-of-arrivals, and device information from the ranging operations; and a processor coupled to the transceiver and to the memory, wherein the processor is operable to execute the program instructions. When executed by the processor, the program instructions cause the UWB device to perform the following operations to enable unlocking the UWB device in the wireless local network, receiving a set of location parameters from a user; determining an unlockable range based on the set of location parameters and a map; receiving, in a lock mode, one or more location-indicative signals from an infrastructure of the communication system; computing a self-position on the map based on the one or more location-indicative signals; and determining whether the self-position is within the unlockable range.

In some embodiments, the operations further include, in response to the self-position being in the unlockable range, obtaining, in the lock mode, a distance from a second UWB device.

In some embodiments, the obtaining of the distance from the second UWB device includes, transmitting an uplink time-difference of arrival (UL-TDoA) signal to an infrastructure; and receiving the distance from the infrastructure.
In some embodiments, the obtaining of the distance from the second UWB device includes computing the distance using Bluetooth ranging.

In some embodiments, the operations further include, in response to the distance being less than a predetermined activation distance that is less than the unlockable range, entering an activation mode by displaying non-confidential features on a locked screen.

In some embodiments, the operations further include turning on at least one of Bluetooth, UWB, or an angle-of-arrival (AoA).

In some embodiments, the operations further include, monitoring the distance using the at least one of Bluetooth, UWB, or AoA; and in response to the distance being less than a predetermined unlock distance, entering an unlock mode by unlocking non-confidential features and confidential features.

In some embodiments, the operations further include receiving, from the user, a set of second location parameters corresponding to an unlock perimeter, determining, in the activation mode, whether the second UWB device is within the unlock perimeter using at least one of the Bluetooth, UWB, or AoA; in response to the second UWB device being within the unlock perimeter, entering an unlock mode by unlocking the locked screen; and in response to the second UWB device being beyond the unlock perimeter, maintaining the activation mode.

In some embodiments, the set of second location parameters include an unlock distance range and an unlock angle.

In some embodiments, the operations further include: receiving, from the user, a set of configuration parameters corresponding to a trigger movement and a time period; determining, in the activation mode, whether the trigger movement is received in the time period; in response to receiving the trigger movement in the time period, entering an unlock mode by unlocking the locked screen; and in response to not receiving the trigger movement in the time period, maintaining the activation mode.
In some embodiments, the trigger movement includes physical contact from the user.

In some embodiments, the one or more location-indicative signals include a plurality of downlink-time difference of arrival (DL-TDoA) signals; and the computing of the self-position includes performing trilateration on the plurality of DL-TDoA signals with respect to the map.

In some embodiments, the one or more location-indicative signals include a plurality of WiFi signals; and the computing of the self-position includes comparing strengths of the plurality of WiFi signals with a pre-recorded signal strength table to determine the self-position with respect to the map.

In some embodiments, the one or more location-indicative signals include a WiFi signal or a cellular signal that includes an IP address; and the computing of the self-location includes determining the self-location based on the IP address.

In some embodiments, the UWB device further includes, in response to the self-position being beyond the unlockable range, maintaining the lock mode.

Embodiments of the present disclosure provide an ultra-wideband (UWB) device, comprising, a transceiver operable to perform a UWB communication; a memory for storing program instructions, distances, angle-of-arrivals, and device information from the ranging operations; and a processor coupled to the transceiver and to the memory, wherein the processor is operable to execute the program instructions. When the program instructions are executed by the processor, the UWB device performs the following operations to enable unlocking one of a first UWB device or a second UWB device in the wireless local network: receiving a first signal indicating a first location of the first UWB device and the second signal indicating a second location of a second UWB device; determining a distance between the first UWB device and the second UWB device based on the first signal and the second signal; and in response to the distance being less than a predetermined activation range, transmitting respective signals to the first UWB device and the second UWB device to turn on at least one of Bluetooth or UWB.

In some embodiments, the first signal includes time of flight (TOF) information of the first UWB device, and the second signal includes TOF information of the second UWB device.

Those skilled in the art will appreciate the scope of the present disclosure and realize additional aspects thereof after reading the following detailed description of the preferred embodiments in association with the accompanying drawing figures.

### BRIEF DESCRIPTION OF THE DRAWING FIGURES

The accompanying drawing figures incorporated in and forming a part of this specification illustrate several aspects of the disclosure, and together with the description, serve to explain the principles of the disclosure.
FIG. 1 illustrates an example wireless positioning system that includes a wireless local network, a network control device, a plurality of anchors, and one or more tags, according to some aspects of the present disclosure.
FIG. 2A illustrates an example block diagram of a tag, according to some aspects of the present disclosure.
FIG. 2B illustrates an example block diagram of a network device and/or an anchor, according to some aspects of the present disclosure.
FIG. 3A illustrates an unlockable range, a predetermined activation distance, and a predetermined unlock distance used in unlocking a UWB device, according to some aspects of the present disclosure.
FIG. 3B illustrate scenarios in which a UWB device is located in a unlockable range and outside the unlockable range, according to some aspects of the present disclosure.
FIG. 4A illustrates three phases to unlock a UWB device, according to some aspects of the present disclosure.
FIG. 4B illustrates an unlock perimeter used to unlock a UWB device, according to some aspects of the present disclosure.
FIG. 4C illustrates certain location parameters for configuring the unlock perimeter, according to some aspects of the present disclosure.
FIG. 5A illustrates a signaling diagram showing the communication amongst an infrastructure and UWB device in unlocking a UWB device, according to some aspects of the present disclosure.
FIG. 5B illustrates a signaling diagram showing the communication between two UWB devices to unlock a UWB device, according to some aspects of the present disclosure.
FIG. 6A illustrates example operations of a UWB device to unlock itself, according to some aspects of the present disclosure.
FIG. 6B illustrates example operations of an infrastructure to unlock a UWB device, according to some aspects of the present disclosure.

### DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. Additionally, like reference numerals denote like features throughout specification and drawings.

It should be appreciated that the blocks in each signaling diagram or flowchart and combinations of the signaling diagrams or flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each signaling diagram or flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction for performing the functions described in connection with a block(s) in each signaling diagram or flowchart. Since the computer program instructions may be equipped in a computer or other programmable data processing devices, instructions that generate a process executed by a computer as a series of operational steps are performed by the computer or other programmable data processing devices and operate the computer or other programmable data processing devices may provide steps for executing the functions described in connection with a block(s) in each signaling diagram or flowchart.

Each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

Hereinafter, embodiments are described in detail with reference to the accompanying drawings. Further, although a communication system using ultra-wideband (UWB) is described in connection with embodiments, as an example, the embodiments may also apply to other communication systems with similar technical background or features. For example, a communication system using Bluetooth, Wireless Fidelity (WiFi), or ZigBee may be included therein. Further, embodiments may be modified in such a range as not to significantly depart from the scope of the present disclosure under the determination by one of ordinary skill in the art and such modifications may be applicable to other communication systems.

As used herein, a user device and a personal device are used to merely distinguish two UWB devices, and are not meant to limit the functions and/or types of devices in any aspect. In various embodiments, the personal device and the user device may be any suitable electronic devices capable of localization and communication in a real-time location system (RTLS). In some applications, the user device can be carried by a user and have a variable location, and may be a portable device such as a mobile phone (e.g., a smartphone), a smart watch, a tablet, a ring, etc. In some applications, the personal device is the device that the user attempts to lock/unlock, and its location may or may not vary. For example, the personal device may belong to the user, and can be a laptop, a desktop, a tablet, a smart TV, etc. In various embodiments, the user device and the personal device may both have UWB capabilities, as well as one or more other communication capabilities such as Bluetooth, WiFi, near-field communication (NFC), etc. The user device and the personal device may each be referred to as a UWB device.

As used herein, an infrastructure may refer to the underlying framework or foundation that supports the overall operation and functionality of the RTLS. The infrastructure encompasses the physical and logical components that enable communication in the RTLS to occur efficiently and reliably. The infrastructure may also provide necessary resources and services for devices to connect, exchange information, and communicate with each other. For example, an infrastructure may include network components that make up the communication network. The network components may include routers, gateways, switches, accesses points (anchors), cables, and/or other hardware. The infrastructure may also include communication protocols that dictate how data is formatted, transmitted, and received. Examples of communication protocols may include TCP/IP (Transmission Control Protocol/Internet Protocol) for the internet and various protocols used in wireless communication such as UWB, WiFi, Bluetooth, etc. The infrastructure may also include servers that host services, applications, and data that devices can access. Examples of the servers include email servers, web servers, data servers, etc. The infrastructure may also include transmission media through which data is transmitted, such as fiber optic cables, coaxial cables, wireless channels, and/or satellite links. Other components of the infrastructure may include data centers that houses servers, storage systems, and network equipment, software and middleware for performing different applications, power systems, and management and monitoring tools.

UWB is a wireless communication technology that uses a wide bandwidth, typically about 500 MHz or larger, or has a 10 dB bandwidth greater than 20% of the center frequency (as defined e.g., in ITU-R SM. 1755-0: "Characteristics of ultra-wideband technology", ITU, 2006). UWB technology enables users to securely and accurately determine the distance between 2 devices. UWB enables relative position estimation based on the distance between two devices or accurate position estimation of a device based on the distance from fixed devices (whose positions are known, also referred to as anchors or anchor devices). The present disclosure assumes that the user device and the personal device are capable of communicating through UWB (referred to as "UWB-enabled devices" or simply UWB devices).

The above capability of UWB technology may be exploited to seamlessly lock or unlock a specific UWB device, such as a laptop or personal computer (PC). For example, when the distance between a laptop and another UWB device (for instance a mobile phone and/or a smart watch) of a given user is within a specific distance, the laptop may automatically unlock and allow the user to access the laptop. Conversely, if this distance is beyond a specific threshold, the laptop may automatically lock.

However, as previously mentioned, this approach to unlock a device based on the distance from a UWB device (e.g., a mobile phone and/or a smart watch) can raise concerns over intention detection, energy consumption, and security in an existing communication system. The user may not necessarily intend to unlock the laptop even though the user is standing in the proximity of the laptop. If a laptop is unlocked inappropriately, it may enable unintended users to access private information. Similarly, the presence of the UWB device in the vicinity to the laptop does not prove that the user is nearby. The baseline of intent detection is to ensure that the UWB device is held by the user. Also, when being locked for a long duration, it may be energy consuming for a laptop to continuously monitor whether a UWB device belonging to the user is nearby. Further, if the mobile phone and the laptop are stolen, the laptop may be unlocked by an unauthorized user using the mobile phone.

The present techniques addresses the above issues by leveraging UWB ability to accurately locate a device, as well as to accurately measure an angle-of-arrival. The solution uses UWB enabled location-based criteria to allow a robust logical access to personal devices (such as computers or laptops). For the security aspect, this solution exploits UWB technology to restrict the use of a personal device to a precise set of locations. For the energy consumption aspect, in this solution, the personal device to unlock (e.g., a laptop) may wake up and initiate communication with a user device (e.g., a mobile phone) only when notified (e.g., by the infrastructure) that the user is at a predetermined intermediate distance from the personal device. A laptop may wake up, remain locked, and show a list of non-confidential information (e.g., low-security features), e.g., notifications of received emails, calendars, etc. This operation can reduce energy consumption (which may be an issue if a laptop remains unused for a long period of time, particularly if a UWB radar is used to confirm the presence of a user/user device prior to unlocking). For the detection of intention aspect, this solution exploits UWB distance and angle-of-arrival (AoA) measurement to unambiguously detect the intention of a user to unlock his personal device (by checking that the user device is within a preconfigured area (or unlock perimeter), also referred to as a "virtual deck" in this disclosure). An alternative (or complementary) option is for the user to actively trigger the unlock by a predetermined movement such as touching the mouse or the screen of the personal device.

In some embodiments, one or more "unlock authorized areas" are configured, e.g., by a user. For example, a user can configure the unlock authorized areas (or unlockable ranges) by entering location parameters into the personal device. The personal device may determine one or more unlock authorized areas based on the location parameters and a prestored map of the environment/vicinity. A personal device (e.g., a laptop) can only be unlocked when it determines that it is located within one of the configured unlock authorized areas. In some embodiments, the personal device uses downlink time-difference of arrival (DL-TDoA) to obtain its own location. In some embodiments, a "virtual deck" or an unlock perimeter is configured, e.g., by the user. The user's intention to unlock the personal device can be determined by checking whether the position of a user device (e.g., a mobile phone) satisfies the conditions associated with a configured virtual deck (e.g., "allowed/predetermined distance range" and "allowed/predetermined AoA range" between the smartphone and the personal device).

Embodiments of the present disclosure provide a system and methods for automatically unlocking a UWB device more accurately without sacrificing security and energy consumption. The UWB device can automatically unlock when all preconfigured authentication conditions are met, without receiving any type-in words (e.g., a password, biometrics, and/or a PIN) manually entered by a user. The UWB device, e.g., a personal device such as a laptop/computer, may function as a tag in a RTLS, which includes an infrastructure that includes a gateway and a plurality of anchors (access points). The UWB device may determine when to activate and/or unlock based on its own location and the real-time location of another UWB device, e.g., a user device such as a mobile phone. To implement the activate/unlock functions, a user may first configure an unlockable range (e.g., an authorized unlock area/perimeter) such that the personal device can only be unlocked in the unlockable range. The user may also configure an activation distance within the unlockable range, such that the personal device can be activated only when the distance between the user device and the personal device is less than the activation distance. Being activated, the personal device may start displaying low-security features (e.g., non-confidential matters) while staying locked. The user may further configure an unlock distance that is less than the activation distance, such that the personal device unlocks automatically when the distance from the user device is less than the unlock distance. In some embodiments, the user configures an unlock perimeter (e.g., a virtual deck) such that the personal device automatically unlocks when the user device is placed in the unlock perimeter. In various embodiments, the user can configure these features by inputting various parameters, e.g., into the personal device and/or the user device.

Several preconfigured authentication conditions may be set up by a user to unlock the personal device more accurately and securely, e.g., to improve the security, accuracy, and energy consumption of the personal device (or communication system). In various embodiments, more than one ranges/distances are configured for the personal device to determine the user's intention and/or conserve energy. As mentioned above, the personal device may first determine its own location, e.g., whether it is in the unlockable range. The personal device may localize itself through one or more of DL-TDoA, WiFi, and/or its IP address. After determining that it is located in the unlockable range, the personal device may obtain the real-time distance between the user device and the personal device through one or more of uplink-TDoA (UL-TDoA), Bluetooth ranging, or UWB ranging. The personal device may determine whether the real-time distance is less than the activation distance. After determining the real-time distance is less than the activation distance, the personal device may start UWB ranging with the user device, and may automatically unlock if the condition of the user device meets the predetermined criteria, such as being sufficiently close to the personal device, being placed in the preconfigured unlock perimeter, or receiving a user's touch on a predetermined component. Compared to existing unlocking methods, the present disclosure provides a more secure and more accurate process to unlock a personal device, without undesirably high energy consumption.

In this present disclosure, a personal device may be in a lock mode, an activation mode, or an unlock mode. The lock mode may refer to a security feature on the personal device that allows a user to protect the personal device from unauthorized access, e.g., when the user is away. When the personal device is in the lock mode, the display device ,e.g., the screen, of the personal device is locked and stops to display any user/application information. A user may not access any information in the personal device when the personal device is in the lock mode. When the personal device is in the activation mode, the screen of the personal device is locked but can display certain low-security features such as non-confidential information (e.g., containing no personal information of the user). The personal device can display more information in the activation mode, than in the lock mode. A user may view only limited information (from the screen) in the personal device when the personal device is in the activation mode. When the personal device is in the unlock mode, the screen of the personal device is unlocked, and the user can access (e.g., view, edit, etc.) all information in the personal device.

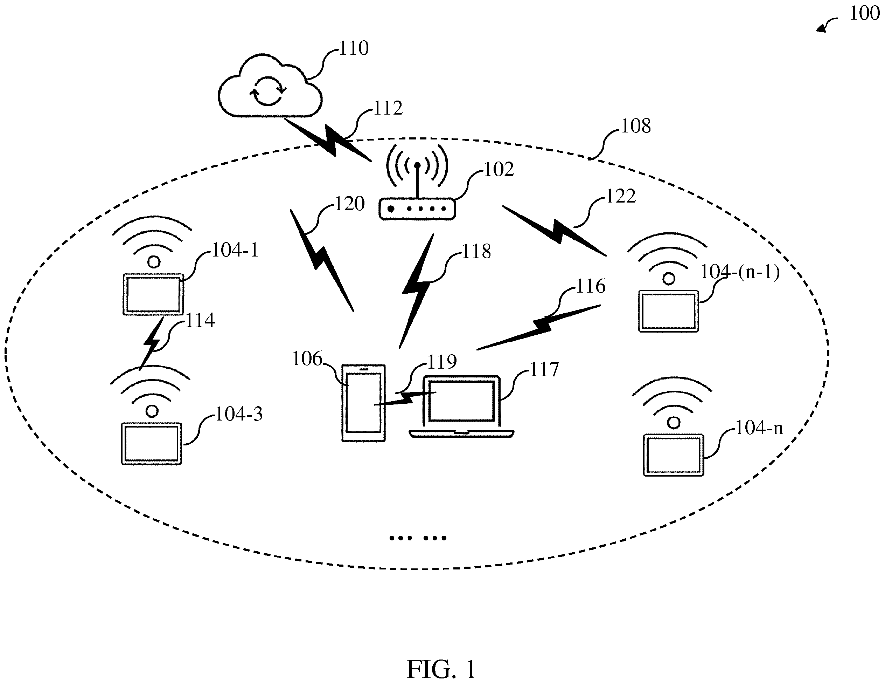

FIG. 1 illustrates an example wireless positioning system 100, according to some embodiments of the present disclosure. Positioning system 100 may be an example of a RTLS. Positioning system 100 may include a network control device 102, a cloud network 110, a plurality of anchors (e.g., 104-1, 104-2, ..., 104-n, n being a positive integer greater than 1), tags 106 and 117, and a local wireless network 108. In some embodiments, tag 106 is a mobile device that is carried by a user and can move from one point to another. In some embodiments, tag 117 is a laptop/desktop that can lock and unlock itself based on a plurality of authentication conditions (e.g., its own location, and/or the distance from tag 106, etc.). In this disclosure, tag 106 may also be referred to as a user device (e.g., "UD"), and tag 117 may also be referred to as a personal device (e.g., "PD"). In some embodiments, the anchors (e.g., 104-1, ..., 104-n) communicate with one another (via communication link 114), and one or more of tags 106 and 117 listen to the anchors to localize themselves based on UL-TDoA, DL-TDoA, UWB, WiFi, Bluetooth, etc. In some embodiments, tags 106 and 117 perform TWR (e.g., single-sided TWR(SS-TWR)) to determine the distance in between. In some embodiments, network control device 102, the anchors (e.g., 104-1, ..., 104-n), and tags 106 and 117 are wirelessly connected to local wireless network 108, which can be any wireless area network that allows devices to connect and communicate with each other wireless within a limited geographic area. For example, local wireless network 108, as denoted by the dotted line, may be an automation network in a residential area, a hospital, a commercial building, a factory plant, a playground, a school, or the like. In various embodiments, local wireless network 108 may be built on one or more wireless communication protocols such as Wi-Fi, Bluetooth, near field communication (NFC), wireless local area network (LAN), Matter, Zigbee, IrDA, etc. It should be noted that, the number of anchors and the number of tags in positioning system 100 may vary, in different applications, and should not be limited by the embodiments of the present disclosure.

Anchors 104-1, ..., 104-n may include a plurality of network devices that allow the controller (e.g., an engineer or management) of positioning system 100 to access, control, and/or configure. Anchors 104-1, ..., 104-n may each be a fixed point or a reference location used to enhance the accuracy and stability of positioning system 100. For example, anchors 104-1, ..., 104-n may include beacons and/or access points placed in a designated area, e.g., covered by local wireless network 108. Anchors 104-1, ..., 104-n may each have built-in software and hardware that enable itself to emit/blink radio frequency (RF) signals (e.g., UWB signals) that can be used by mobile devices (e.g., tags 106 and/or 117) or sensors to determine their positions relative to the known locations of anchors 104-1, ..., 104-n. In some embodiments, anchors 104-1, ..., 104-n transmit RF signals in one or more wireless communication protocols such as UWB, WiFi, Bluetooth, NFC, or the like. In some embodiments, anchors 104-1, ..., 104-n may transmit device information, timestamps, and/or device status information (e.g., location information) to tags 106 and/or 117 (e.g., via communication link 116). In some embodiments, anchors 104-1, ..., 104-n may transmit device information, timestamps, and/or device status information (e.g., location information such as time of flight (TOF)) to network control device 102 (e.g., via communication link 122). In some embodiments, each of anchors 104-1, ..., 104-n includes a UWB transceiver configured for ranging and/or data transfer.

Tag 106 may be in the form of a mobile device capable of voice and/or data communication. Tag 106 may have built-in software and hardware that enable tag 106 to communicate with network control device 102, anchors 104-1, ..., 104-n, tag 117, and/or cloud network 110 via RF signals, each as UWB signals. In some embodiments, tag 106 is configured to communicate with anchors 104-1, ..., 104-n and tag 117 via RF signals in UWB, WiFi, Bluetooth, NFC, or the like. In some embodiments, tag 106 includes a UWB transceiver configured for ranging and/or data transfer. Tag 106 may also have the form of a mobile phone (a cellular telephone, and/or a smartphone), a laptop computer, a tablet, a personal digital assistant (PDA), a computing device, wearable devices (e.g., a smart watch, or the like), or any other mobile device having wireless connection capability. Although only a single tag 106 is shown in FIG. 1, one of ordinary skill in the art will appreciate that multiple tags may connect to the local wireless network 108. In some embodiments, tag 106 may listen to and/or range directly with anchors 104-1, ... , 104-n (e.g., via communication link 116). In some embodiments, tag 106 may communicate with anchors 104-1, ..., 104-n via network control device 102 (e.g., via communication link 118) and/or the cloud network 110 (e.g., via communication link 120). In some embodiments, tag 106 may communicate with tag 117 (e.g., via communication link 119) using UWB, WiFi, Bluetooth, cellular, Ethernet, or a combination thereof. In some embodiments, tag 106 shares its location with the infrastructure by transmitting a RF signal to one or more of anchors 104-1, ..., 104-n using UL-TDoA, and the one or more anchors each transmits the respective time of flight (TOF) of tag 106 to network control device 102 for distance computation. Tag 106 may also switch on UWB and/or Bluetooth when triggered by the infrastructure (e.g., network control device 102) to allow tag 117 to determine a distance between tag 106 and tag 117. Tag 106 may perform Bluetooth ranging and/or UWB ranging with tag 117.

Tag 117 may be in the form of a laptop/desktop capable of voice and/or data communication. Tag 117 may have built-in software and hardware that enable tag 117 to communicate with network control device 102, anchors 104-1, ..., 104-n, tag 106, and/or cloud network 110 via RF signals, such as UWB signals. In some embodiments, tag 117 is configured to communicate with anchors 104-1, ..., 104-n and tag 106 via RF signals in UWB, WiFi, Bluetooth, NFC, or the like. In some embodiments, tag 117 includes a UWB transceiver configured for ranging and/or data transfer. Tag 117 may also have the form of a tablet, a personal digital assistant (PDA), a computing device, wearable devices (e.g., a smart watch, or the like), a smart TV, or any other mobile devices having wireless and/or wired connection capability. Although only one tag 117 is shown in FIG. 1, one of ordinary skill in the art will appreciate that more than one tag 117 may connect to the local wireless network 108. In some embodiments, tag 117 may listen to and/or range directly with anchors 104-1, ..., 104-n (e.g., via communication link 116). In some embodiments, tag 117 may communicate with anchors 104-1, ..., 104-n via network control device 102 (e.g., via communication link 118) and/or the cloud network 110 (e.g., via communication link 120). In some embodiments, tag 117 may communicate with tag 106 (e.g., via communication link 119) using UWB, WiFi, Bluetooth, cellular, Ethernet, or a combination thereof.

In some embodiments, tag 117 determines its own location using DL-TDoA, and determines if the location is in a predetermined unlockable range. If yes, tag 117 start to share its location to the infrastructure by transmitting a RF signal to one or more of anchors 104-1, ... , 104-n using UL-TDoA, and the one or more anchors each transmits the respective time of flight (TOF) of tag 117 to network control device 502 for distance computation. Tag 117 may also switch on UWB and/or Bluetooth when triggered by the infrastructure (e.g., network control device 102) to start ranging with tag 106, and to determine a distance between tag 106 and tag 117. In some embodiments, tag 117 switches on Bluetooth and/or UWB automatically, e.g., when being in the unlockable range, and computes the distance from tag 106 using Bluetooth and/or UWB, without the need to receive a trigger signal from the infrastructure. Tag 117 may perform Bluetooth ranging with tag 106 to estimate the real-time distance in between, without the need of the trigger signal from the infrastructure. Tag 117 may determine its mode, e.g., lock mode, activation mode, and unlock mode, based on the predetermined authentication conditions such as location/position of tag 106 and its own location.

Network control device 102 has its radio communication range formed in a radio communication scheme. The communication range may cover a perimeter/an area such as a house, a commercial building, a hospital, a playground, etc. For instance, network control device 102 may communicate data and signals with anchors 104-1, ..., 104-n located within the radio communication range such as local wireless network 108 can use one or more radio communication schemes. Network control device 102 may also be communicatively connected to a cloud network 110 through wired/wireless communication link 112, communicatively connected to anchors 104-1, ..., 104-n through communication link 122, and communicatively connected to tags 106 and 117 through communication link 118. In some embodiments, network control device 102 may use a wired communication protocol and/or wireless communication protocols. Network control device 102 may acquire information from anchors 104-1, ... , 104-n located in the radio communication range and provide to cloud network 110 with the acquired information. In some embodiments, network control device 102 has wireless communication functions, and may include, but not limited to, one or more of a gateway, a hub, a television, a router, a modem, a range extender, a set-top box, a smart speaker, a mobile device (e.g., tablet, mobile phone), and/or the like. For example, network control device 102 may include a gateway that allows data to flow from local wireless network 108 to cloud network 110, or vice versa. In some embodiments, network control device 102 communicates using more than one internet protocol (IP) to connect local wireless network 108 and cloud network 110. In various embodiments, the network control device 102 communicates in wireless communication protocols such as Matter, Zigbee, Bluetooth (e.g., BLE), WiFi, IrDA, TCP/IP, etc. In some embodiments, network control device 102 has the capability to compute a location of tag 106 and/or tag 117 using UL-TDoA and a trilateration algorithm, and/or a distance between tags 106 and 117. Network control device 102 may also determine its operations based on the computed distance. In some embodiments, network control device 102 triggers tag 106 and/or tag 117 to switch/turn on Bluetooth and/or UWB for short-distance communication when the computed distance is less than a predetermined activation distance.

Network control device 102 may also provide tags 106 and 117, and anchors 104-1, ... , 104-n with access to one or more external networks, such as cloud network 110, the Internet, and/or other wide area networks. Cloud network 110 may include a cloud infrastructure system that provides cloud services. In certain embodiments, services provided by cloud network 110 may include registration and access control of anchors 104-1, ..., 104-n, and tags 106 and 117. Cloud network 110 may include one or more computers, servers, and/or systems. In some embodiments, cloud network 110 may include an application server that hosts an application, and a user may order and use the application via communication link 120. In some embodiments, communication links 114, 116, and 119 may each include a UWB communication interface. Communication links 112, 114, 116, 118, 119, 120, and 122 may also support other types of wireless connections, such as a Bluetooth communication interface, a Wi-Fi communication interface, a cellular network connection (e.g., 4G, 5G) interface, a near field communication (NFC) interface, a ZigBee communication interface, or a combination thereof.

Upon being powered on or reset, anchors 104-1, ..., 104-n may be registered with the cloud network 110 and associated with a logical network within local wireless network 108. In some embodiments, network control device 102, anchors 104-1, ..., 104-n, cloud network 110, and local wireless network 108, and any other components that support the communication of tags 106 and 117 may be referred to as an infrastructure. In various embodiments, tags 106 and 117 may each transmit information to the infrastructure or receive information from the infrastructure to facilitate localization computation. It should be appreciated that the local wireless network 108 may include other components than those depicted, and the specific number of components and/or their arrangement is not limited by the description of FIG. 1.

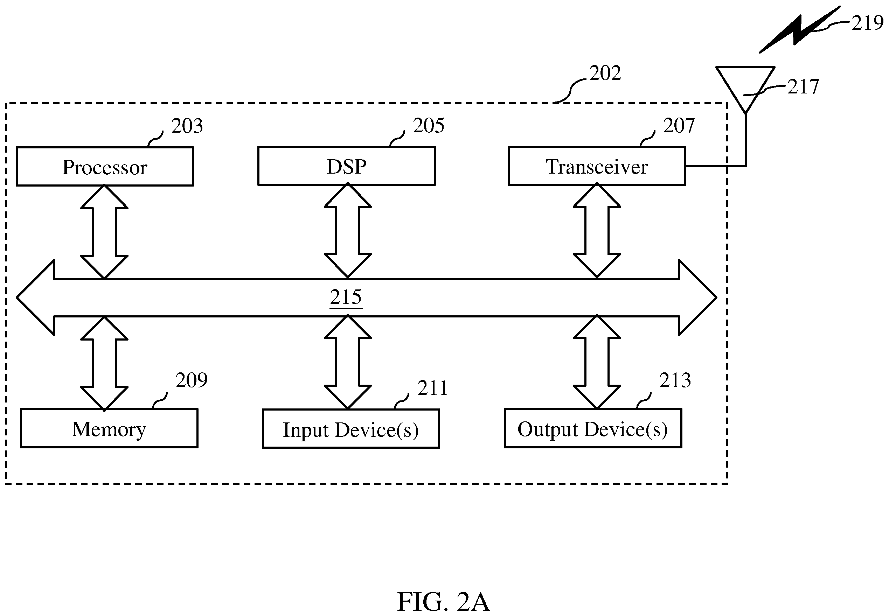

FIG. 2A illustrates the structure of a UWB device 202, e.g., which can be an example of tag 106 and/or tag 117. In some embodiments, UWB device 202 includes a processor 203, a digital signal processor (DSP) 205, a transceiver 207, an antenna 217, a memory 209, an input device 211, an output device 213, and a bus 215. The hardware components of UWB device 202 may be communicatively coupled to bus 215. In some embodiments, bus 215 can be used for processor 203 to communicate between cores and/or with memory 209. Processor 203 may include one or more general-purpose processors and/or one or more special-purpose processors (such as digital signal processing chips, graphics acceleration processors, and/or the like). Processor 203 may process wireless signals 219 received by transceiver 207, such as DL-TDoA signals, ranging signals, Bluetooth signals, WiFi signals, and/or data from UWB communication. Input device 211 may include a camera, a mouse, a keyboard, a touch sensitive screen/display, a touch pad, a keypad, and/or the like. An output device 213 may include a display, a printer, and/or the like. In some embodiments, a user may load an unlocking application, which automatically computes the distance between tag 106 and 117, and determines to unlock or remain locked.

UWB device 202 may include a transceiver 207 communicatively coupled to bus 215. Transceiver 207 may be operable to transmit and receive wireless signals 219 via antenna 217. Wireless signals 219 may be transmitted/received via a wireless network (e.g., local wireless network 108). In some embodiments, the wireless network may be any wireless network such as a local wireless network (e.g., local wireless network 108), such as WiFi, a Personal Access Network (PAN), such as Matter, Bluetooth^{®} or Zigbee^{®}, or a cellular network (e.g., 4G, 5G). Transceiver 207 may be configured to receive wireless signals 219 via antenna 217 from a network control device (e.g., 102), anchors (e.g., 104-1, ..., 104-n), another tag, a cloud network (e.g., 110), and/or the like. UWB device 202 may also be configured to decode and/or decrypt, via the DSP 205 and/or processor 203, various signals received from network control device 102, anchors 104-1, ..., 104-n, other tags, cloud network 110, and/or the like.

Memory 209 may include one or more non-transitory storage devices that can include local and/or network accessible storage, a disk drive, a drive array, an optical storage device, a solid-state storage device such as a random access memory ("RAM") and/or a read-only memory ("ROM"), a programmable ROM, a flash-updateable ROM, and/or the like. Such storage devices may be configured to implement any appropriate data storage, including without limitation, various file systems, database structures, and/or the like. In some embodiments, memory 209 includes a device database, including device information (e.g., unique device identification (ID), device keys, vendor information, device type, etc.) of UWB device 202 and/or one or more of anchors 104-1, ..., 104-n, a map of the environment covered by local wireless network 108, a table of strengths of WiFi signal versus locations (e.g., coordinates) in the environment, location information (e.g., timestamps, coordinates, IP addresses, etc.) associated with another tag, and so on. In some embodiments, the map of the environment may include a layout of the area covered by local wireless network 108, such as a building, one or more rooms, etc. The map may include localization information of the area (e.g., coordinates, distances, angles, etc.).

In various embodiments, functions/operations may be stored as one or more instructions or code in memory 209, such as on a computer-readable storage medium, such as RAM, ROM, FLASH, or disc drive, and executed by processor 203 or DSP 205. UWB device 202 may also include software components (e.g., located within memory 209), including, for example, an operating system, device drivers, executable libraries, and/or other executable code, such as one or more application programs. The application programs may include computer programs, stored in memory 209, executed by processor 203 and/or DSP 205 to implement various functions under the control of the operating system. The computer programs may have been pre-packaged with UWB device 202 or may have been downloaded by a user into memory 209 of the UWB device 202. Some applications (or mobile applications on tag 106) may be more user-interactive applications, such as an application to unlock itself, whereas some other applications may be less user-interactive in nature. For example, a user may configure (e.g., edit, update, delete, etc.) an unlockable range, an activation distance, an unlock distance, and/or an unlock perimeter by inputting corresponding parameters into the application. In various embodiments, the user may perform such configuration on tag 106 and/or tag 117.

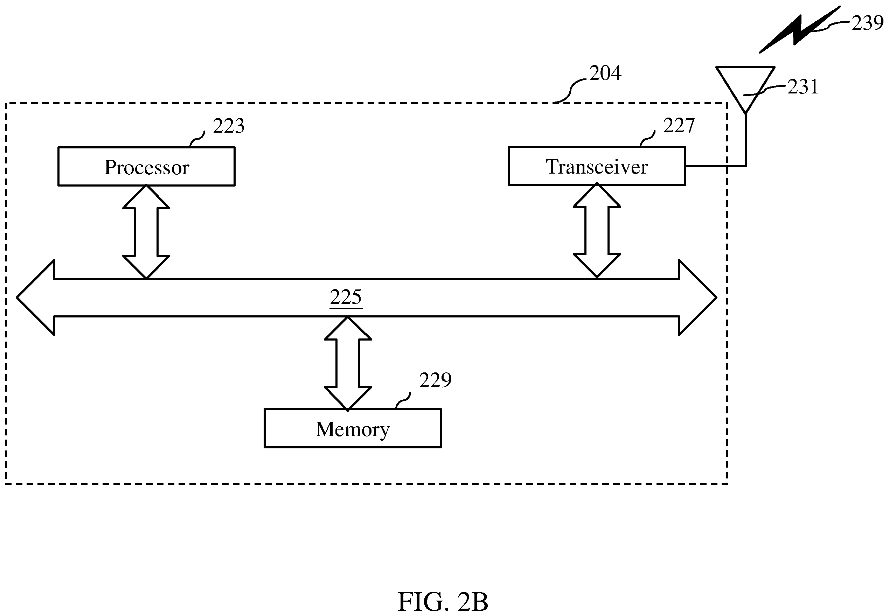

FIG. 2B illustrates the structure of another UWB device 204, which may be an example of any one of anchors 104-1, ..., 104-n. UWB device 204 may include a transceiver 227 and an antenna 231 (communicatively coupled to transceiver 227) for wireless communication with another anchor, tags 106 and 117, and/or network control device 102. In some embodiments, UWB device 204 also includes a processor 223, a memory 229, and a bus 225.

Transceiver 227 may be operable to transmit and receive wireless signals 239 via antenna 231. Wireless signals 239 may be transmitted/received via a wireless network (e.g., local wireless network 108). In some embodiments, the wireless network may be any wireless network such as a local wireless network (e.g., local wireless network 108), such as WiFi, a Personal Access Network (PAN), such as Matter, Bluetooth^{®} or Zigbee^{®}, or a cellular network (e.g., 4G, 5G). Transceiver 227 may be configured to or receive wireless signals 239 via antenna 231 from a network control device (e.g., 102), a tag (e.g., 106 and/or 117), another anchor, and/or the like. Optionally, UWB device 204 may include a DSP (not show) for decoding and/or decrypting, various received signals 239.

In some embodiments, UWB device 204 includes a processor 223 and a memory 229. Processor 223 may include one or more general-purpose processors and/or one or more special-purpose processors, similar to processor 203. Memory 229 may include one or more non-transitory storage devices, similar to memory 209. Bus 225 may communicatively couple processor 223, transceiver 227, and memory 229 such that processor 223 may execute instructions stored in memory 229 and may process signals 239 received by transceiver 227, such as DL-TDoA signals, UL-TDoA signals, and/or ranging signal/data from UWB communication. In some embodiments, memory 229 may be stored with position information and timestamps of one or more other anchors and/or tags. For example, memory 229 may be stored with relative position information of one or more other anchors, absolute position information for one or more other anchors, timestamps of tags 106 and 117 for UL-TDoA, etc.

In some embodiments, UWB device 204 may also be an example of a network control device 102, which may include a transceiver 227 and an antenna 231 (communicatively coupled to transceiver 227) for wireless communication with anchors 104-1, ..., 104-n, and tags 106 and 117. In some embodiments, network control device 102 also includes a processor 223, a memory 229, a bus 225, and other suitable elements. The functions of processor 223, bus 225, transceiver 227, memory 229, and antenna 231 may be similar to those of an anchor, and the detailed description is not repeated. In some embodiments, memory 229 of UWB device 204 may be stored with predetermined parameters corresponding to an activation distance. UWB device 204 may determine the distance between tags (e.g., tag 106 and tag 117) using UL-TDoA. UWB device 204 may determine to trigger to switch on the UWB and/or Bluetooth functions in tags (e.g., tag 106 and/or tag 117).

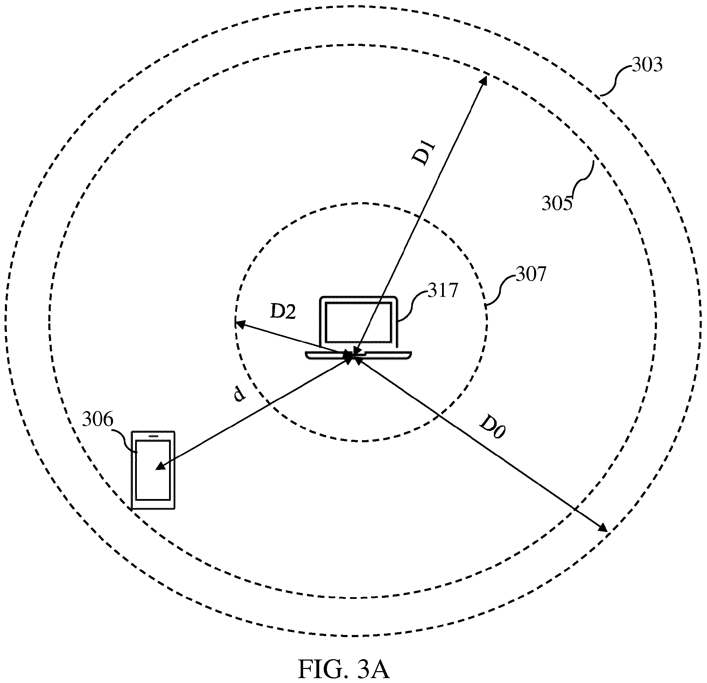

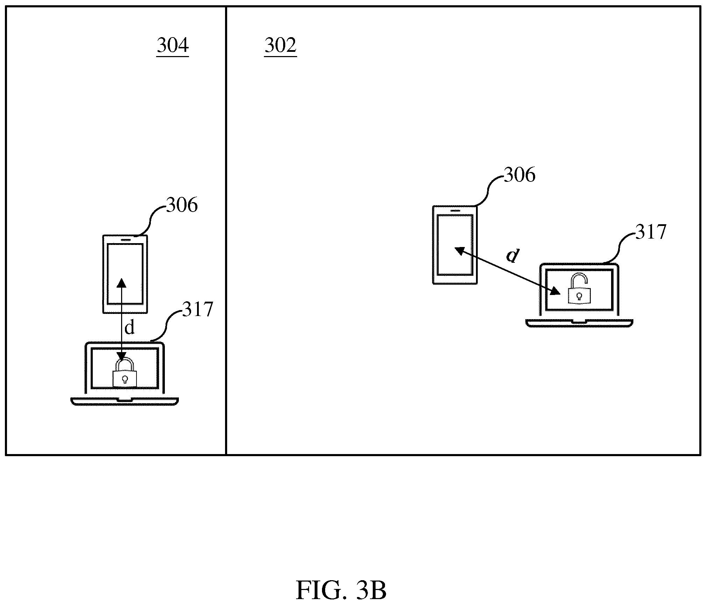

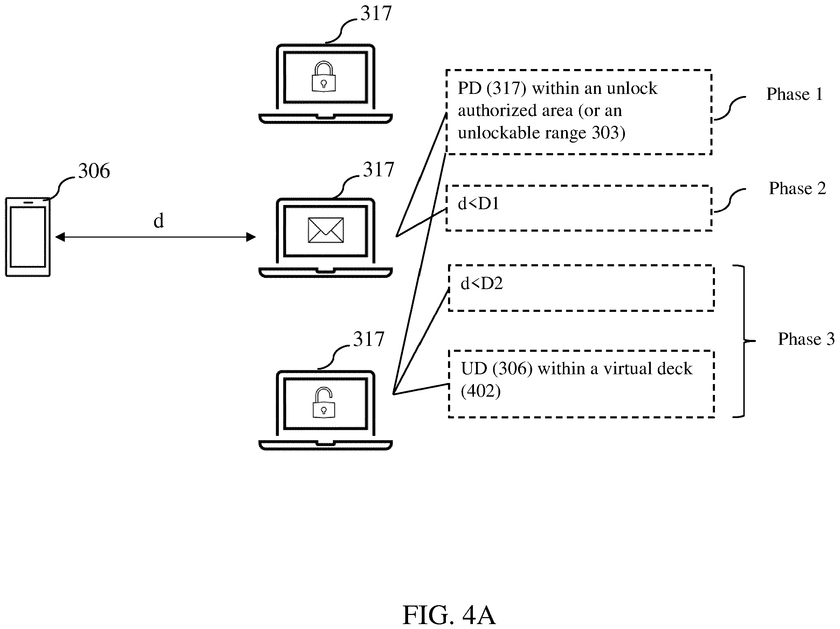

FIGS. 3A, 3B, 4A-4C illustrate a personal device 317 configured to unlock itself under different scenarios, according to some embodiments. FIG. 3A shows ranges/distances configured and used in the authentication conditions, e.g., by a user of the personal device 317, to unlock personal device 317 using a user device 306. As previously described, personal device 317 and user device 306 may each be a suitable electronic device capable of performing UWB, Bluetooth, WiFi, NFC, and/or cellular functions. Personal device 317 and user device 306 may respectively correspond to tag 117 and tag 106. As an example, personal device 317 may be in the form of a laptop, and user device 306 may be in the form of a mobile phone.

FIG. 3A shows an unlockable range 303, an activation distance D1, and an unlock range D2, according to some embodiments. Unlockable range 303 may also be referred to as an "unlock authorized area." Personal device 317 can be unlocked only when located in unlockable range 303, and cannot be unlocked outside unlockable range 303. In other words, personal device 317 can automatically enter an unlock mode from a lock mode only in unlockable range 303 when all authentication conditions are met, and is not configured to do so outside unlockable range 303 even if all authentication conditions are met. Unlockable range 303 may be configured as an area, such as one or more rooms. Unlockable range 303 may have any suitable shape and/or dimensions. For example, unlockable range 303 may have a squared shape, a triangular shape, a circular shape, an irregular shape, or a combination thereof. For example, unlockable range 303 may include one or more rooms and has a rectangular shape, with a length and a width. In another example (as shown in FIG. 3A), unlockable range 303 has a circular shape with a radius of D0. A user may configure unlockable range 303 on personal device 317 and/or user device 306. For example, a user may enter a set of location parameters (such as radius D0, an angle corresponding to radius D0, a width, a length, etc.), and/or draw/select the room chosen to be in unlockable range 303 with regard to a map of the environment, on personal device 317 and/or user device 306. Personal device 317 may store the user's selections/configurations, and may determine unlockable range 303 with regard to the map. In some embodiments, when in lock mode, personal device 317 computes its own location, e.g., using DL-TDoA, to determine if it is in unlockable range 303.

Activation distance D1 may represent the distance limit between personal device 317 and user device 306 when personal device 317 is in lock mode. An area 305 with radius of D1 may be encompassed by unlockable range 303. When personal device 317 is in unlockable range 303, and a distance d (e.g., a real-time distance) between user device 306 and personal device 317 reaches or is less than activation distance D1, personal device 317 may enter an activation mode. In activation mode, personal device 317 may wake up from lock mode, and may start displaying low-security features (e.g., features containing no or little personal information), such as non-confidential information, e.g., email notifications and/or calendars on the lock screen. In the background of the activation mode, personal device 317 may switch on UWB and/or Bluetooth to start UWB ranging (e.g., TWR, and/or AoA) with user device 306 to obtain the real-time location (e.g., distance and/or relative angular position) of user device 306 with regard to personal device 317.

Unlock distance D2 may represent the distance limit between personal distance 317 and user device 306 when personal device 317 is in activation mode. An area 307 with radius of D2 may be encompassed by unlockable range 303 and area 305. When personal device 317 is in unlockable range 303, and distance d between user device 306 and personal device 317 reaches or is less than unlock distance D2 and the authentication has passed, personal device 317 may automatically enter an unlock mode. For example, personal device 317 may unlock its screen, and user may then have access to both low-security features and high-security features (e.g., features containing personal information) such as emails, chat history, etc. without entering a password to unlock personal device 317. In some embodiments, the authentication step prior to the unlocking of personal device 317 ensures personal device 317 is unlocked only when user device 306 (and/or the user) is authenticated. The authentication step may include any suitable step to verify the identity of user device 306. In some embodiments, the authentication step may be done while personal device 317 is measuring distance d versus unlock distance D2 via UWB. For example, if "Dynamic Scrambled Timestamp Sequence (STS)" is configured for the UWB session used to measure distance d, UWB ranging may be successful only if user device 306 has the proper encryption keys.

A user may configure D0, D1, and D2 on personal device 317 and/or user device 306. In various embodiments, the user may also configure other authentication conditions such as an unlock perimeter (also referred to as a virtual deck), physical contact by the user, etc. For example, the user may enter location parameters such as distance ranges and angles to configure an unlock perimeter. Personal device 317 may automatically unlock if user device 306 is placed in the unlock perimeter. In some embodiments, the unlock perimeter is configured to be encompassed by area 305, and may be inside or outside area 307. For example, the unlock perimeter is configured to be encompassed by area 307. In another example, the user may configure a physical contact as a touch on the mouse, keyboard and/or screen of user device 306, screen, keyboard, and/or mouse of personal device 317, in a past period of time (e.g., in the past 30 seconds, etc.)

FIG. 3B illustrate scenarios of personal device 317 being inside and outside an unlockable range, according to some embodiments. As an example, a user may configure the walls of room 302 (e.g., an office) to be an unlockable range such that personal device 317 may not be unlocked automatically outside room 302. A corridor 304 may be outside room 302 and is thus outside the unlockable range. Accordingly, personal device 317 may automatically unlock in room 302, when other authentication conditions are met (e.g., distance d being less than the unlock distance). Personal device 317 may not automatically unlock in corridor 304, regardless of the value of distance d.

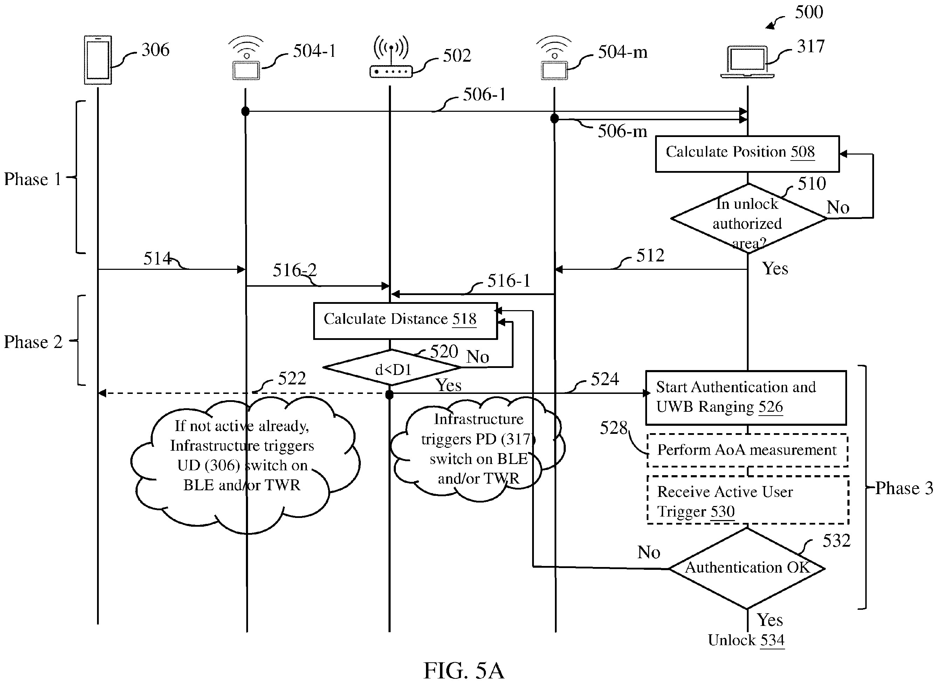

FIG. 4A illustrates different phases/stages a personal device (PD) 317 takes to unlock itself, with a user device (UD) 306, according to some embodiments. FIG. 4A show different authentication conditions to unlock personal device 317. As shown in FIG. 4A, personal device 317 may be locked, e.g., in a lock mode before phase 1. In lock mode, personal device 317 may continuously compute its location, e.g., using DL-TDoA, WiFi, and/or IP address, and determine its location regard to the map of the environment. Further details of phases 1-3 are illustrated in FIG. 5A.

In phase 1, personal device 317 may calculate its location in the background and determine whether it is located in the unlockable range or unlock authorized area (e.g., 303). In some embodiments, personal device 317 computes its location using DL-TDoA. For example, personal device 317 may compute its own location based on the received RF signals blinked by one or more anchors (e.g., 104-1, ..., 104-n). The signals from the anchors may include respective timestamps at signal transmissions, by the anchors. Personal device 317 may compute time of flight (TOF) corresponding to different anchors based on these timestamps and the times the RF signals are received by personal device 317, using a trilateration algorithm. In various other embodiments, personal device 317 may also determine its location using other suitable means such as the strengths of WiFi signal, and/or IP address. Personal device 317 may then determine its location with regard to a map of the environment. Personal device 317 may have a locked screen in phase 1.

In phase 2, personal device 317 may further determine whether distance d between user device 306 and personal device 317 is less than an activation distance. Personal device 317 may obtain distance d from the infrastructure or from computation by itself. If distance d is less than activation distance D1, personal device 317 may enter an activation mode, in which personal device 317 may display low-security features (non-confidential information) such email notifications, calendars, etc., on the locked screen.

In some embodiments, personal device 317 may obtain distance d from the infrastructure using UL-TDoA. Personal device 317 may start to share its location with the infrastructure to obtain distance d from user device 306. For example, personal device 317 may transmit a respective RF signal to the infrastructure (e.g., anchors 104-1, ..., 104-n and network control device 102) with a first timestamp and user device 306 may transmit a respective RF signal to the infrastructure with a second timestamp. The infrastructure may compute distance d based on the first timestamp and the second timestamp. If distance d is less than activation distance D1, the infrastructure may trigger personal device 317 to switch on UWB and/or Bluetooth. In some embodiments, the infrastructure also triggers personal device 317 to start displaying low-security features (non-confidential information) such email notifications, calendars, etc. on the locked screen.

In some embodiments, personal device 317 may obtain distance d without the infrastructure. For example, after personal device 317 determines itself being in the unlockable range, personal device 317 may turn on the UWB and/or Bluetooth to start computing/monitoring distance d using Bluetooth ranging and/or UWB ranging. When personal device 317 determines the distance is less than activation distance D1, personal device 317 may start displaying low-security features (non-confidential information) such email notifications, calendars, etc. on the locked screen.

In phase 3, personal device 317 determines distance d, and enters the unlock mode when distance d is less than the unlock distance (e.g., D2) and/or user device 306 is located in a predetermined unlock perimeter (e.g., virtual deck). Using UWB and/or Bluetooth, personal device 317 may determine distance d in real-time. For example, personal device 317 and user device 306 may start TWR and AoA such that personal device 317 may determine distance d and an angle of user device 306 with regard to personal device 317. In some embodiments, if personal device 317 is in the unlockable range, and d is less than D2, personal device 317 automatically unlocks, e.g., by unlocking its screen so a user can access low-security features and high-security features in personal device 317. In some embodiments, if personal device 317 is in the unlockable range, and user device 306 is positioned in the unlock perimeter (e.g., 402), personal device 317 automatically unlocks. In some embodiments, if personal device 317 is in the unlockable range, and personal device 317 receives physical contact (e.g., touch) on a predetermined component (e.g., mouse, screen, keyboard, etc.), personal device 317 automatically unlocks. In various embodiments, personal device 317 automatically unlocks when at least one (e.g., one, two, or three) of the conditions "d<D2," "user device 306 being in unlock perimeter," and "receiving physical contact on a predetermined component of personal device 317" is satisfied.

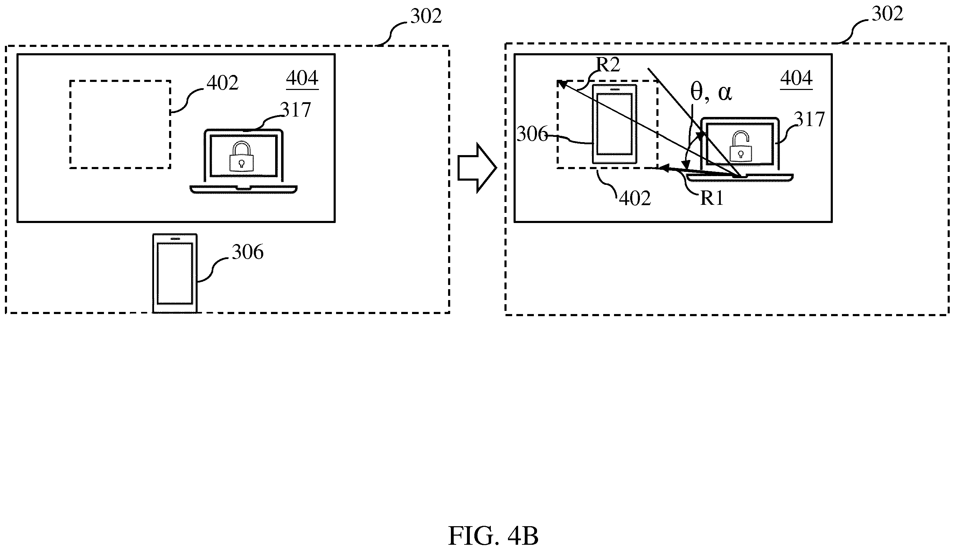

FIG. 4B illustrates an example of an unlock perimeter 402 (e.g., a virtual deck), according to some embodiments. A user may configure that personal device 317 can automatically unlock if personal device 317 is in the unlockable range, and user device 306 is positioned in the unlock perimeter (e.g., 402). As shown in FIG. 4B, personal device 317 may be located in room 302, which may be previously configured as to be in the unlockable range. A user may further configure that an area 402 of a desk 404, on which personal device 317 is placed, is a unlock perimeter 402. Personal device 317 may automatically unlock, if personal device 317 is placed in room 302, and user device 306 is placed in unlock perimeter 402.

A user may determine unlock perimeter 402 by area with location parameters such as a distance range and an angle range from personal device 317. In some embodiments, the user may configure unlock perimeter 402 to be a fixed area (e.g., with fixed absolute position range) such that its position range is unchanged regardless of the position of personal device 317. For example, unlock perimeter 402 may be configured to be a specific area of desk 404, a shelf, a chair, etc. Personal device 317 may unlock if user device 306 is in perimeter 402, regardless of the relative positions between personal device 317 and user device 306 in room 302. In some embodiments, the user may configure unlock perimeter 402 to be an area that moves with (or attached to) personal device 317 in room 302. In some embodiments, unlock perimeter 402 has fixed relative position range with regard to personal device 317. For example, the user may determine unlock perimeter 402 to be within a predetermined distance range and angle range with regard to personal device 317. Personal device 317 may unlock if user device 306 is in perimeter 402, regardless of the absolute positions of personal device 317 and user device 306 in room 302.

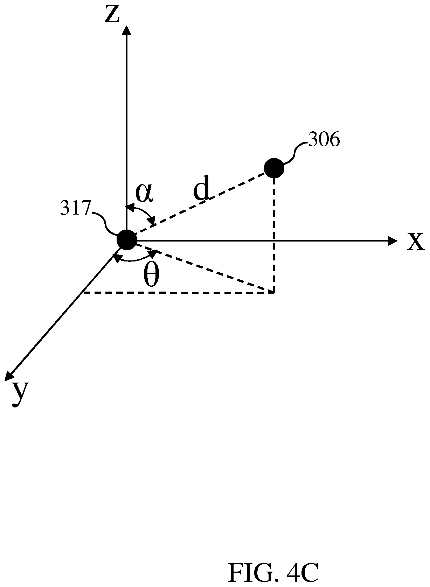

In some embodiments, the user may configure unlock perimeter 402 using a distance range (R1, R2) and an angle range (θ₀, α₀). In various embodiments, the distance range and the angle range may be used to configure both a fixed absolute position range and a fixed relative position range for an unlock perimeter. FIG. 4C shows an example of the distance and angles between user device 306 and personal device 317. In some embodiments, distance d between user device 306 and personal device 317 is between R1 and R2, where R1 and R2 respectively represent a minimum value and a maximum value of distance d. In some embodiments, R2 is less than D2 (e.g., the unlock distance). In some embodiments, angle θ represents the angle between user device 306 and personal device 317 in the x-y plane, and angle α represents the angle between user device 306 and personal device 317 in the x-z plane. The value of θ may be between 0 and θ₀, and the value of α may be between 0 and α₀. As an example, the x-y plane may be parallel to the keyboard of personal device 317, the x-z plane may be perpendicular to the keyboard of personal device 317, and the origin of axis's may be located at the center of the keyboard of personal device 317. A user may select a fixed or a relative position range, and configure (e.g., customize) the values of R1, R2, θ₀, and/or α₀ on personal device 317 and/or user device 306. Other ways to configure unlock perimeter 402 are also possible, and should not be limited by the embodiments of the present disclosure.

FIG. 5A illustrates a signaling diagram 500 showing the communication amongst a personal device 317, a user device 306, a plurality of anchors 504-1... 504-m, and a gateway 502, according to some embodiments. Signaling diagram 500 may show details of the communication in phases 1-3 described in FIG. 4A. Anchors 504-1, ...,504-m (m being a positive integer of at least 2) may be similar to anchors 104-1, ..., 104-n, and gateway 502 may be similar to network control device 102. In some embodiment, anchors 504-1, ..., 504-m and gateway 502 may be part of an infrastructure. It should be noted that even though merely two anchors are shown in signaling diagram 500, more than two anchors may participate in the communication. For example, the number of anchors communicating with personal device 317 and/or user device 306 may be at least three. In some embodiments, although now shown, a user may configure an unlockable range, an activation distance, an unlock distance, an unlock perimeter, and/or an active physical contact by the user, prior to the communications shown in signaling diagram 500.

As shown in FIG. 5A, in phase 1, personal device 317, e.g., in a lock mode, may calculate its position in the background, at step 508. Personal device 317 may receive a plurality of RF signals 506-1, ..., 506-m (or blinks) from a plurality of anchors 504-1, ..., 504-m. RF signals 506-1, ..., 506-m may be synchronized signals each having a timestamp indicating the time of transmission from the respective anchor. Personal device 317 may then calculate its position based on DL-TDoA using a trilateration algorithm. Personal device 317 may then determine its location with regard to a map of the environment. At step 510, if personal device 317 determines it is located in the unlockable range (or 303, e.g., the unlock authorized area), personal device 317 may start sharing its location with the infrastructure by transmitting a RF signal 512 to anchors 504-1, ..., 504-m. If personal device 317 determines it is located outside the unlockable range, personal device 317 may return to step 508.

In some embodiments, personal device 317 may determine its position 508 using other means. For example, personal device 317 may receive a WiFi signal, and may compare the strength of the WiFi signal with a pre-recorded signal strength table of the WiFi signals to determine its location with respect to the map. In another example, personal device 317 receives a WiFi signal and/or a cellular signal that contains an IP address. Personal device 317 may determine its location based on the IP address, such as using an IP geolocation service.

Personal device 317 may transmit RF signal 512 to one or more of anchors 504-1, ... , 504-m using UL-TDoA. A RF signal 512 may contain a timestamp indicating the time of transmission from personal device 317. The one or more anchors may each compute the respective TOF indicating the travel time from personal device 317, and may transmit the TOF to gateway 502 in a RF signal 516-1. Meanwhile, user device 306 may transmit a RF signal 514 to one or more of anchors 504-1, ..., 504-m using UL-TDoA. RF signal 514 may contain a timestamp indicating the time of transmission from user device 306. The one or more anchors may each compute the respective TOF indicating the travel time from user device 306, and may transmit the TOF to gateway 502 in a RF signal 516-2. Receiving TOF's of personal device 317 and user device 306, gateway 502 may compute the positions of personal device 317 and user device 306, e.g., using a trilateration algorithm, as well as a distance d between personal device 317 and user device 306.

In phase 2, gateway 502 may determine distance d between personal device 317 and user device 306 using a suitable algorithm such as trilateration, in step 518. Gateway 502 may determine whether distance d is less than activation distance D1 in step 520. If yes, gateway 502 (e.g., infrastructure) transmits a trigger signal 522 to user device 306 and a trigger signal 524 to personal device 317. Otherwise, gateway 502 returns to step 518. In some embodiments, signals 522 and 524 may include out-of-band (OOB) signals such as WiFi signals and/or Ethernet signals to trigger user device 306 and personal device 317 to switch on Bluetooth and/or UWB, and optionally AoA functions.

In some embodiments, user device 306 and/or personal device 317 automatically switch on UWB and/or Bluetooth if personal device 317 determines it is in the unlockable range (e.g., obtaining yes from step 510). User device 306 and personal device 317 may or may not perform UL-TDoA to obtain distance d from the infrastructure (e.g., gateway 502). In some embodiments, user device 306 may keep UWB and/or Bluetooth on constantly, and personal device 317 may turn on UWB and/or Bluetooth if obtains yes from step 510. Instead of performing UL-TDoA and obtaining distance d from the infrastructure (e.g., gateway 502), personal device 317 may initiate UWB ranging with user device 306 using one or more of one-way ranging (OWR) and/or TWR. Examples of TWR include SS TWR and DS TWR. For example, personal device 317 and user device 306 may start initialization (e.g., out-of-band (OOB) characterization) using Bluetooth after personal device 317 determines it is in the unlockable range, and then perform ranging. The OOB characterization may include exchanging parameters and establishing the UWB channel for ranging. Personal device 317 may then obtain distance d in real-time.

In some embodiments, instead of using UWB ranging or UL-TDoA, personal device 317 may use Bluetooth ranging to obtain distance d. For example, user device 306 may keep Bluetooth constantly, and personal device 317 may turn on Bluetooth if obtains yes from step 510. Personal device 317 and user device 306 may then exchange signals to form a Bluetooth connection. Personal device 317 may receive signals from user device 306, while the strength of signals is measured in dBm (decibels milliwatt), also known as received signal strength indicator (RSSI). Personal device 317 may then determine/estimate distance d with a Bluetooth beacon (e.g., an anchor of 504-1, ..., 504-m or separate Bluetooth anchors that are now shown) using RSSI, which has an inverse relationship with distance d. Personal device 317 may further use trilateration and/or fingerprinting to determine distance d.

In phase 3, when personal device 317 determines distance d is less than activation distance D1, personal device 317 and user device 306 may start authentication and UWB ranging, in step 526. Personal device 317 and user device 306 may establish a UWB channel (if hasn't) and start UWB ranging. For example, personal device 317 and user device 306 may switch on UWB and/or Bluetooth after receiving trigger signals 524 and 522, respectively, and proceed to step 526. In various embodiments, personal device 317 and user device 306 may start OOB characterization using Bluetooth, followed by UWB ranging. For example, SS TWR or DS TWR may be performed. In some embodiments, while personal device 317 and user device 306 are performing UWB ranging, personal device 317 may also verify the identity, e.g., using "Dynamic STS", of user device 306 to ensure the distance between personal device 317 and user device 306 is less than unlock distance D2 (in step 532).

In some embodiments, alternatively or additionally, depending on the user's configuration, personal device 317 may determine an AoA in step 528. For example, the user may configure an unlock perimeter (e.g., virtual deck 402) that includes a distance range and an angle range with respect to personal device 317, which can be unlocked if detected to be in the unlock perimeter. Personal device 317 may then perform AoA measurement, along with the UWB ranging, to determine the angle of user device 306 with regard to personal device 317. For example, to perform AoA measurement, personal device 317 may obtain phase differences between signals (from user device 306) received at different antennas, and process the signals.

In some embodiments, alternatively or additionally, depending on the user's configuration, personal device 317 may receive an active user trigger in step 530. For example, the user may configure an active physical user trigger/movement on personal device 317, and it can be used to unlock personal device 317. The active user trigger may include a touch on the mouse, a touch on the screen, a touch on the keyboard, or a combination thereof. The user may configure a time period that the active user trigger can be authenticated. For example, the user may set the time period to be 20 seconds, 30 seconds, 60 seconds, etc. An active user trigger may be counted as received if the trigger takes place within the configured time period, and may not be counted if it takes place outside the configured time period.

In various embodiments, depending on the user's configurations, steps 528 and 530 may be optional.

In step 532, personal device 317 may determine whether the authentication passes, such as whether distance d is less than unlock distance D2. Optionally, depending on the user's configuration, the authentication also includes whether user device 306 is placed in the unlock perimeter and/or an active user's trigger is received. If the authentication passes, personal device 317 may proceed to step 534, in which personal device 317 automatically unlocks. The user may have access to low-security features (e.g., non-confidential features) and high-security features (e.g., confidential features), e.g., all features in personal device 317. If the authentication fails to pass, personal device 317 may proceed to step 518. In some embodiments, if the authentication fails to pass, personal device 317 may start computing distance d using Bluetooth ranging and/or UWB ranging, instead of obtaining distance from the infrastructure (e.g., gateway 502).

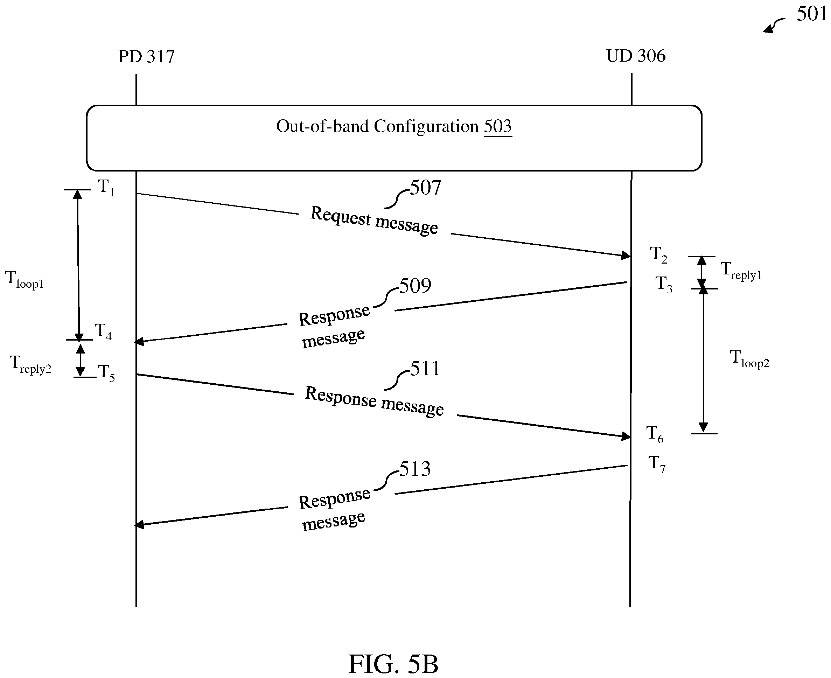

FIG. 5B illustrates a signaling diagram 501 showing UWB communication between personal device (PD) 317 and user device (UD) 306 using single-sided two-way ranging (DS TWR), according to some embodiments of the present disclosure. Signaling diagram 501 is shown as an example of the communication between personal device 317 and user device 306 in step 526, as described in FIG. 5A. In various other embodiments, other UWB ranging methods, such as OWR, and/or SS TWR can also be used.

Personal device 317 may discover user device 306 using an out-of-band (OOB) technique, such as Bluetooth or BLE, and may establish an OOB (e.g., BLE) channel for initial characterization 503 (e.g., negotiation and service data exchange). In some embodiments, personal device 307 discovers user device 306 and establish the OOB channel using a device identification (ID) transmitted by user device 306 via Bluetooth. After the initial characterization, personal device 317 and user device 306 may start UWB communications, e.g., a UWB ranging such as DS TWR. Personal device 317 may transmit a request message 507 (e.g., a poll) to user device 306 at time T₁. User device 306 may record T₂ as a time of arrival and T₃ as a time for transmission of a response message 509. User device 306 may transmit response message 509 after a time of reply T_{reply1} that is equal to (T₃-T₂). The response message 509 may include information such as time of reply T_{reply1}. Personal device 317 may receive response message 509 at T₄, and may compute a time of loop Tₗₒₒₚ₁ as (T₄-T₁). Personal device 317 may transmit a response message 511 at T5 and compute a time of reply T_{reply2} as (T₅-T₄). User device 306 may receive response message 511 at T₆ and may compute a time of loop Tₗₒₒₚ₂ as (T₆-T₃). User device 306 may then transmit Tₗₒₒₚ₂ in a response message 513 to personal device 317. Personal device 317 may receive response message 513 and compute a time of flight (TOF) as (Tₗₒₒₚ₁×Tₗₒₒₚ₂-T_{reply1}×T_{reply2})/(Tₗₒₒₚ₁+Tₗₒₒₚ₂+T_{reply1}+T_{reply2}). Personal device 317 may then compute distance d between personal device 317 and user device 306 to be d=TOF×speed of light. In some embodiments, personal device 317 also determines an AoA based on the phase change between request message 507 and response message 509, detected from the antenna(s) of personal device 317. Personal device 317 may then determine a relative position of user device 306 (e.g., to personal device 317) based on distance d and the AoA.

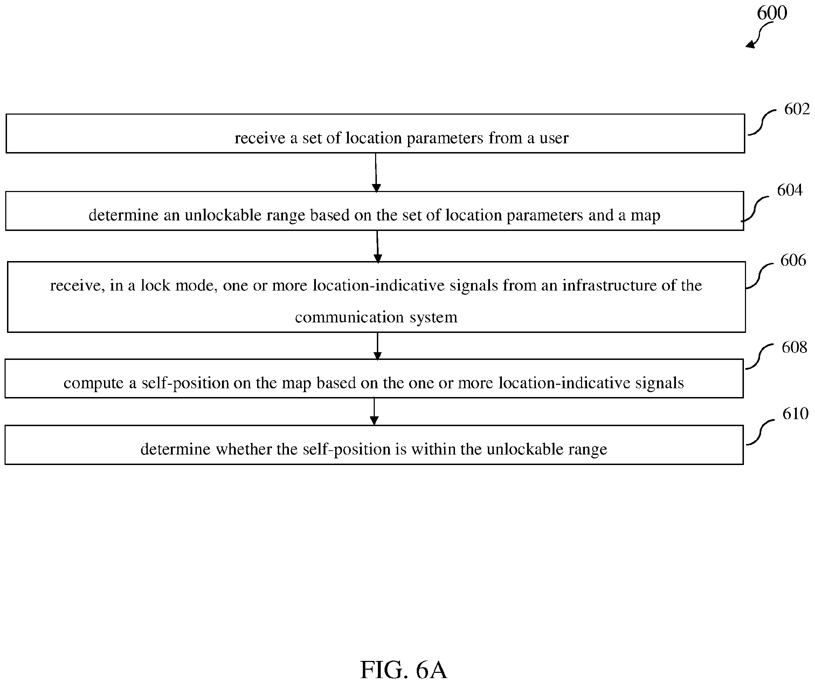

FIG. 6A is a flowchart of a method 600 for a tag (e.g., a personal device 117, 317) to enable unlocking itself in a wireless communication system (e.g., a RTLS), according to some embodiments of the present disclosure. Method 600 is merely an example, and is not intended to limit the present disclosure beyond what is explicitly recited in the claims. Additional operations can be provided before, during, and after the method 600, and some operations described can be replaced, eliminated, or moved around for additional embodiments of method 600. For ease of illustration, FIG. 6A is described in connection with FIGS. 3A and 5A.

At step 602, a set of location parameters from are received from a user. As shown in FIG 3A, a user may configure an unlockable range (303) by entering corresponding parameters into personal device 317.

At step 604, an unlockable range is determined based on the set of location parameters and a map. Personal device 317 may determine the unlockable range in a map of the environment.

At step 606, in a lock mode, one or more location-indicative signals are received from an infrastructure of the communication system. As shown in FIG. 5A, personal device 317 may receive DL-TDoA signals (e.g., 506-1, ..., 506-m) from anchors (504-1, ..., 504-m).

At step 608, a self-position on the map is computed based on the one or more location-indicative signals. As shown in FIG. 5A, personal device 317 may compute its location on the map using DL-TDoA signals and a trilateration algorithm.

At step 610, whether the self-position is within the unlockable range is determined. As shown in FIG. 5A, personal device 317 may determine whether it is located in the unlockable range.

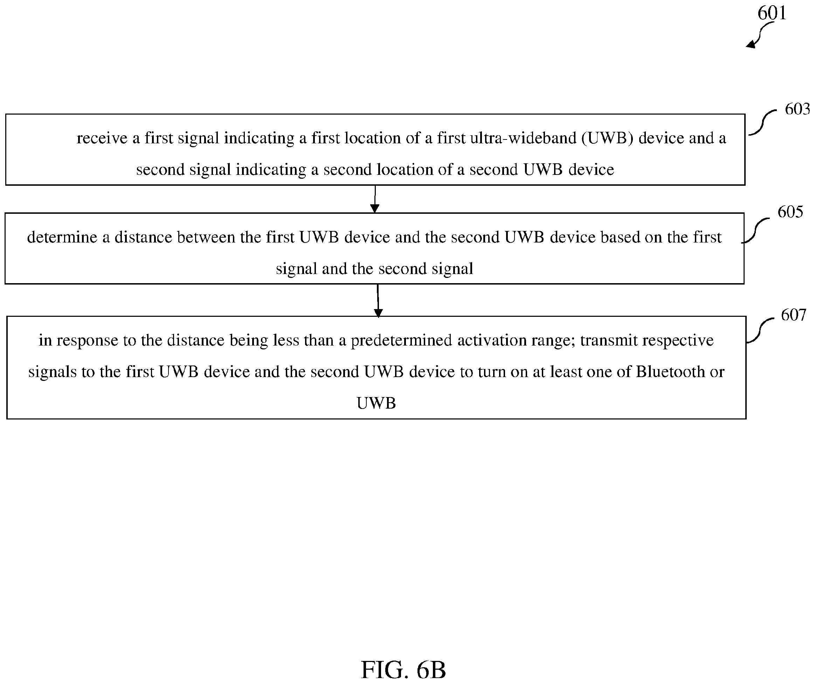

FIG. 6B is a flowchart of a method 601 for a network control device (e.g., 102, 502) to facilitate a personal device to unlock itself in a wireless communication system (RTLS), according to some embodiments of the present disclosure. Method 601 is merely an example, and is not intended to limit the present disclosure beyond what is explicitly recited in the claims. Additional operations can be provided before, during, and after the method 601, and some operations described can be replaced, eliminated, or moved around for additional embodiments of method 501. For ease of illustration, FIG. 6B is described in connection with

FIG. 5A.

At step 603, a first signal indicating a first location of a first ultra-wideband (UWB) device and a second signal indicating a second location of a second UWB device are received. As shown in FIG. 5A, gateway 502 may receive UL-TDoA signals (516-1 and 516-2) containing TOF's of personal device 317 and user device 306 from a plurality of anchors 504-1, ..., 504-2.

At step 605, a distance between the first UWB device and the second UWB device is determined based on the first signal and the second signal. As shown in FIG. 5A, gateway 502 may compute distance d between personal device 317 and user device 306 based on the UL-TDoA signals (516-1 and 516-2).

At step 607, in response to the distance being less than a predetermined activation range, respective signals are transmitted to the first UWB device and the second UWB device to turn on at least one of Bluetooth or UWB. As shown in FIG. 5A, if distance d is less than activation distance D1, gateway 502 transmit trigger signals (524 and 522) to personal device 317 and user device 306.

Thus, from one perspective, there has been described a method for enabling unlocking an ultra-wide band (UWB) device in a communication system. The method includes, receiving a set of location parameters from a user; determining an unlockable range based on the set of location parameters and a map; receiving, in a lock mode, one or more location-indicative signals from an infrastructure of the communication system; computing a self-position on the map based on the one or more location-indicative signals; and determining whether the self-position is within the unlockable range.

Those skilled in the art will recognize improvements and modifications to the preferred embodiments of the present disclosure. All such improvements and modifications are considered within the scope of the concepts disclosed herein and the claims that follow.

Further examples of feature combinations taught by the present disclosure are set out in the following numbered clauses:
1. A method for enabling unlocking an ultra-wide band (UWB) device in a communication system, comprising:
   receiving a set of location parameters from a user;
   determining an unlockable range based on the set of location parameters and a map;
   receiving, in a lock mode, one or more location-indicative signals from an infrastructure of the communication system;
   computing a self-position on the map based on the one or more location-indicative signals; and
   determining whether the self-position is within the unlockable range.
2. The method of clause 1, further comprising, in response to the self-position being in the unlockable range, obtaining, in the lock mode, a distance from a second UWB device.
3. The method of clause 2, wherein the obtaining of the distance from the second UWB device comprises:
   transmitting an uplink time-difference of arrival (UL-TDoA) signal to an infrastructure; and
   receiving the distance from the infrastructure.
4. The method of clause 2 or clause 3, wherein the obtaining of the distance from the second UWB device comprises computing the distance using Bluetooth ranging.
5. The method of any of clauses 2 to 4, further comprising:
   in response to the distance being less than a predetermined activation distance that is less than the unlockable range, entering an activation mode by displaying non-confidential features on a locked screen.
6. The method of any preceding claim, further comprising turning on at least one of Bluetooth, UWB, or an angle-of-arrival (AoA).
7. The method of clause 6, further comprising:
   monitoring the distance or a relative angular position of the second UWB device using the at least one of Bluetooth, UWB, or AoA; and
   in response to the distance being less than a predetermined unlock distance, entering an unlock mode by unlocking non-confidential features and confidential features.
8. The method of any of clause 5 to 7, further comprising:
   receiving, from the user, a set of second location parameters corresponding to an unlock perimeter;
   determining, in the activation mode, whether the second UWB device is within the unlock perimeter using at least one of the Bluetooth, UWB, or AoA;
   in response to the second UWB device being within the unlock perimeter, entering an unlock mode by unlocking the locked screen; and
   in response to the second UWB device being beyond the unlock perimeter, maintaining the activation mode.
9. The method of clause 8, wherein the set of second location parameters comprise an unlock distance range and an unlock angle.
10. The method of any of clause 5 to 9, further comprising:
   receiving, from the user, a set of configuration parameters corresponding to a trigger movement and a time period;
   determining, in the activation mode, whether the trigger movement is received in the time period;
   in response to receiving the trigger movement in the time period, entering an unlock mode by unlocking the locked screen; and
   in response to not receiving the trigger movement in the time period, maintaining the activation mode.
11. The method of clause 10, wherein the trigger movement comprises physical contact from the user.
12. The method of any preceding clause, wherein:
   the one or more location-indicative signals comprise a plurality of downlink-time difference of arrival (DL-TDoA) signals; and
   the computing of the self-position comprises performing trilateration on the plurality of DL-TDoA signals with respect to the map.
13. The method of any preceding clause, wherein:
   the one or more location-indicative signals comprise a plurality of WiFi signals; and
   the computing of the self-position comprises comparing strengths of the plurality of WiFi signals with a pre-recorded signal strength table to determine the self-position with respect to the map.
14. The method of any preceding clause, wherein:
   the one or more location-indicative signals comprise a WiFi signal or a cellular signal that comprises an IP address; and
   the computing of the self-location comprises determining the self-location based on the IP address.
15. The method of any preceding clause, further comprising, in response to the self-position being beyond the unlockable range, maintaining the lock mode.
16. A method for enabling unlocking an ultra-wide band (UWB) device in a communication system, comprising:
   receiving a first signal indicating a first location of a first ultra-wideband (UWB) device and a second signal indicating a second location of a second UWB device;
   determining a distance between the first UWB device and the second UWB device based on the first signal and the second signal; and
   in response to the distance being less than a predetermined activation range, transmitting respective signals to the first UWB device and the second UWB device to turn on at least one of Bluetooth or UWB.
17. The method of clause 16, wherein the first signal comprises time of flight (TOF) information of the first UWB device, and the second signal comprises TOF information of the second UWB device.
18. An ultra-wideband (UWB) device, comprising:
   a transceiver operable to perform a UWB communication;
   a memory for storing program instructions, a map of an area covered by a wireless network, a table of strengths of WiFi signals in the area, distances, angle-of-arrivals, and device information from the ranging operations; and
   a processor coupled to the transceiver and to the memory, wherein the processor is operable to execute the program instructions, which, when executed by the processor, cause the UWB device to perform the following operations to enable unlocking the UWB device in the wireless local network:
      receiving a set of location parameters from a user;
      determining an unlockable range based on the set of location parameters and a map;
      receiving, in a lock mode, one or more location-indicative signals from an infrastructure of the communication system;
      computing a self-position on the map based on the one or more location-indicative signals; and
      determining whether the self-position is within the unlockable range.
19. The UWB device of clause 18, wherein the operations further comprise, in response to the self-position being in the unlockable range, obtaining, in the lock mode, a distance from a second UWB device.
20. The UWB device of clause 19, wherein the obtaining of the distance from the second UWB device comprises:
   transmitting an uplink time-difference of arrival (UL-TDoA) signal to an infrastructure; and
   receiving the distance from the infrastructure.
21. The UWB device of clause 20, wherein the obtaining of the distance from the second UWB device comprises computing the distance using Bluetooth ranging.
22. The UWB device of any of clauses 19 to 21, wherein the operations further comprise:
   in response to the distance being less than a predetermined activation distance that is less than the unlockable range, entering an activation mode by displaying non-confidential features on a locked screen.
23. The UWB device of any of clauses 19 to 22, wherein the operations further comprise turning on at least one of Bluetooth, UWB, or an angle-of-arrival (AoA).
24. The UWB device of clause 23, wherein the operations further comprise:
   monitoring the distance using the at least one of Bluetooth, UWB, or AoA; and
   in response to the distance being less than a predetermined unlock distance, entering an unlock mode by unlocking non-confidential features and confidential features.
25. The UWB device of any of clauses 19 to 24, wherein the operations further comprise:
   receiving, from the user, a set of second location parameters corresponding to an unlock perimeter;
   determining, in the activation mode, whether the second UWB device is within the unlock perimeter using at least one of the Bluetooth, UWB, or AoA;
   in response to the second UWB device being within the unlock perimeter, entering an unlock mode by unlocking the locked screen; and
   in response to the second UWB device being beyond the unlock perimeter, maintaining the activation mode.
26. The UWB device of clause 25, wherein the set of second location parameters comprise an unlock distance range and an unlock angle.
27. The UWB device of any of clauses 23 to 26, wherein the operations further comprise:
   receiving, from the user, a set of configuration parameters corresponding to a trigger movement and a time period;
   determining, in the activation mode, whether the trigger movement is received in the time period;
   in response to receiving the trigger movement in the time period, entering an unlock mode by unlocking the locked screen; and
   in response to not receiving the trigger movement in the time period, maintaining the activation mode.
28. The UWB device of clause 27, wherein the trigger movement comprises physical contact from the user.
29. The UWB device of any of clauses 18 to 28, wherein:
   the one or more location-indicative signals comprise a plurality of downlink-time difference of arrival (DL-TDoA) signals; and
   the computing of the self-position comprises performing trilateration on the plurality of DL-TDoA signals with respect to the map.
30. The UWB device of any of clauses 18 to 29, wherein:
   the one or more location-indicative signals comprise a plurality of WiFi signals; and
   the computing of the self-position comprises comparing strengths of the plurality of WiFi signals with a pre-recorded signal strength table to determine the self-position with respect to the map.
31. The UWB device of any of clauses 18 to 30, wherein:
   the one or more location-indicative signals comprise a WiFi signal or a cellular signal that comprises an IP address; and
   the computing of the self-location comprises determining the self-location based on the IP address.
32. The UWB device of any of clauses 18 to 31, further comprising, in response to the self-position being beyond the unlockable range, maintaining the lock mode.
33. An ultra-wideband (UWB) device, comprising:
   a transceiver operable to perform a UWB communication;
   a memory for storing program instructions, distances, angle-of-arrivals, and device information from the ranging operations; and
   a processor coupled to the transceiver and to the memory, wherein the processor is operable to execute the program instructions, which, when executed by the processor, cause the UWB device to perform the following operations to enable unlocking one of a first UWB device or a second UWB device in the wireless local network:
      receiving a first signal indicating a first location of the first UWB device and the second signal indicating a second location of a second UWB device;
      determining a distance between the first UWB device and the second UWB device based on the first signal and the second signal; and
      in response to the distance being less than a predetermined activation range, transmitting respective signals to the first UWB device and the second UWB device to turn on at least one of Bluetooth or UWB.
34. The UWB device of clause 33, wherein the first signal comprises time of flight (TOF) information of the first UWB device, and the second signal comprises TOF information of the second UWB device.

## Claims

1. A method for enabling unlocking an ultra-wide band (UWB) device in a communication system, comprising:
receiving a set of location parameters from a user;
determining an unlockable range based on the set of location parameters and a map;
receiving, in a lock mode, one or more location-indicative signals from an infrastructure of the communication system;
computing a self-position on the map based on the one or more location-indicative signals; and
determining whether the self-position is within the unlockable range.

2. The method of claim 1, further comprising, in response to the self-position being in the unlockable range, obtaining, in the lock mode, a distance from a second UWB device.

3. The method of claim 2, wherein the obtaining of the distance from the second UWB device comprises:
transmitting an uplink time-difference of arrival (UL-TDoA) signal to an infrastructure; and
receiving the distance from the infrastructure.

4. The method of claim 3, wherein the obtaining of the distance from the second UWB device comprises computing the distance using Bluetooth ranging.

5. The method of any of claims 2 to 4, further comprising:
in response to the distance being less than a predetermined activation distance that is less than the unlockable range, entering an activation mode by displaying non-confidential features on a locked screen.

6. The method of claim 5, further comprising turning on at least one of Bluetooth, UWB, or an angle-of-arrival (AoA).

7. The method of claim 6, further comprising:
monitoring the distance or a relative angular position of the second UWB device using the at least one of Bluetooth, UWB, or AoA; and
in response to the distance being less than a predetermined unlock distance, entering an unlock mode by unlocking non-confidential features and confidential features.

8. The method of any of claims 5 to 7, further comprising:
receiving, from the user, a set of second location parameters corresponding to an unlock perimeter;
determining, in the activation mode, whether the second UWB device is within the unlock perimeter using at least one of the Bluetooth, UWB, or AoA;
in response to the second UWB device being within the unlock perimeter, entering an unlock mode by unlocking the locked screen; and
in response to the second UWB device being beyond the unlock perimeter, maintaining the activation mode.

9. The method of claim 8, wherein the set of second location parameters comprise an unlock distance range and an unlock angle.

10. The method of claim 6, further comprising:
receiving, from the user, a set of configuration parameters corresponding to a trigger movement and a time period;
determining, in the activation mode, whether the trigger movement is received in the time period;
in response to receiving the trigger movement in the time period, entering an unlock mode by unlocking the locked screen; and
in response to not receiving the trigger movement in the time period, maintaining the activation mode.

11. The method of claim 10, wherein the trigger movement comprises physical contact from the user.

12. The method of any preceding claim, wherein:
the one or more location-indicative signals comprise a plurality of downlink-time difference of arrival (DL-TDoA) signals; and
the computing of the self-position comprises performing trilateration on the plurality of DL-TDoA signals with respect to the map.

13. The method of any preceding claim, wherein:
the one or more location-indicative signals comprise a plurality of WiFi signals; and
the computing of the self-position comprises comparing strengths of the plurality of WiFi signals with a pre-recorded signal strength table to determine the self-position with respect to the map.

14. A method for enabling unlocking an ultra-wide band (UWB) device in a communication system, comprising:
receiving a first signal indicating a first location of a first ultra-wideband (UWB) device and a second signal indicating a second location of a second UWB device;
determining a distance between the first UWB device and the second UWB device based on the first signal and the second signal; and
in response to the distance being less than a predetermined activation range, transmitting respective signals to the first UWB device and the second UWB device to turn on at least one of Bluetooth or UWB.

15. An ultra-wideband (UWB) device, comprising:
a transceiver operable to perform a UWB communication;
a memory for storing program instructions, a map of an area covered by a wireless network, a table of strengths of WiFi signals in the area, distances, angle-of-arrivals, and device information from the ranging operations; and
a processor coupled to the transceiver and to the memory, wherein the processor is operable to execute the program instructions, which, when executed by the processor, cause the UWB device to perform the following operations to enable unlocking the UWB device in the wireless local network:
receiving a set of location parameters from a user;
determining an unlockable range based on the set of location parameters and a map;
receiving, in a lock mode, one or more location-indicative signals from an infrastructure of the communication system;
computing a self-position on the map based on the one or more location-indicative signals; and
determining whether the self-position is within the unlockable range.
